# EUROPÄISCHE PATENTSCHRIFT

(11) **EP 3 080 407 B1**
(45) Veröffentlichungstag und Bekanntmachung des Hinweises auf die Patenterteilung: **15.04.2020**
(21) Anmeldenummer: 14809841.1
(22) Anmeldetag: 09.12.2014
(51) Int. Cl.: F01K 1/08, F01K 3/00, F01K 17/04

(54) **DAMPFSPEICHERUNG MIT LATENTWÄRMESPEICHER UND DAMPF-THERMOKOMPRESSOR**
STEAM ACCUMULATOR COMPRISING A LATENT HEAT ACCUMULATOR AND A STEAM THERMOCOMPRESSOR
ACCUMULATION D'ÉNERGIE AU MOYEN D'UN ACCUMULATEUR DE CHALEUR ET D'UN THERMOCOMPRESSEUR DE VAPEUR

(30) Priorität: 11.12.2013 DE 102013225543
(43) Veröffentlichungstag der Anmeldung: 19.10.2016
(73) Patentinhaber: Currenta GmbH & Co. OHG, 51368 Leverkusen (DE)
(72) Erfinder: FRANCK, Rüdiger, 51373 Leverkusen (DE)
(74) Vertreter: Michalski Hüttermann & Partner Patentanwälte mbB
(86) Internationale Anmeldenummer: PCT/EP2014/077031
(87) Internationale Veröffentlichungsnummer: WO 2015/086588

(56) Entgegenhaltungen:
- WO-A1-01/27388
- CH-A- 240 453
- DE-A1- 3 630 546
- DE-B3-102007 046 854
- DE-C- 399 300

## Beschreibung

Die vorliegende Erfindung betrifft ein Verfahren zur Entkoppelung der Bereitstellung von Elektrizität und Hochdruckdampf einer Kraft-Wärme-Kopplungs-Anlage, die die primäre Aufgabe der Bereitstellung von Prozessdampf besitzt, d. h. die wärmegeführt betrieben wird.

Die zunehmende Elektrizitätserzeugung aus fluktuierenden erneuerbaren Quellen (fEE) erfordert die Flexibilisierung von thermischen Kraftwerken, insbesondere von industriellen Kraft-Wärme-Kopplungs-Anlagen (KWK-Anlagen), die wegen ihres hohen Nutzungsgrades eine herausragende Bedeutung in der Energiewende haben. Maßnahmen zur Flexibilisierung von Kraftwerken können die Erweiterung des Leistungsbereichs und die Erhöhung der Leistungsänderungsgeschwindigkeit betreffen.

Industrielle KWK-Anlagen mit Gegendruckturbinen und/oder Turbinenanzapfung stellen gleichzeitig aus Frischdampf Wärme in Form von Hochdruckprozessdampf und Elektrizität bereit. Nachfolgend wird deshalb dafür der Begriff Dampfversorgungssystem genutzt. Im wärmegeführten Betrieb bestimmt der Bedarf der Dampfabnehmer die Höhe der Elektrizitätserzeugung. Mit einer Zwischenspeicherung des Prozessdampfes kann die Elektrizitätserzeugungsleistung unabhängig von der Dampfabnahme eingestellt werden. Damit kann für die Dauer des entkoppelten Betriebs Leistung der KWK-Anlage zeitlich verschoben werden. Die Dauer des entkoppelten Betriebs ist durch die Kapazität der Dampfspeicherung begrenzt.

Die Flexibilisierung der Erzeugungsleistung kann bei KWK-Anlagen durch eine Entkoppelung der Bereitstellung von Wärme und Elektrizität erreicht werden. Dadurch kann die KWK-Elektrizitätserzeugungsleistung unabhängig vom Wärmebedarf verändert werden.

Die Leistung der Elektrizitätserzeugung der KWK-Anlage kann bei entkoppelter Fahrweise bedarfsgerecht bei geringem fEE-Dargebot erhöht und umgekehrt bei hohem fEE-Dargebot abgesenkt werden. Bei einer hohen Stromnachfrage wird Prozessdampf auf Vorrat erzeugt und zwischengespeichert. Bei einer niedrigen Stromnachfrage wird Prozessdampf aus dem Dampfspeicher bereitgestellt und die KWK-Elektlizitätserzeugung mit gesenkter Leistung betrieben.

Die Zwischenspeicherung des Dampfes erlaubt zudem die Laständerungsgeschwindigkeiten der Dampfbereitstellung und der Elektrizitätserzeugung unabhängig voneinander zu ändern. Dadurch ergibt sich eine Möglichkeit zur Erhöhung der Leistungsänderungsgeschwindigkeit der Elektrizitätserzeugung, die keine technischen Änderungen an der Dampferzeugung erfordert. Hohe Änderungsgeschwindigkeiten der thermischen Elektrizitätserzeugung sind notwendig, um steile Leistungsgradienten der fEE auszugleichen. Die Vorhaltung von schnell regelbarer elektrischer Leistung ist eine Dienstleistung, die als Regelleistung gehandelt wird.

Angebot und Nachfrage der Elektrizitätserzeugung werden z. B. auf dem Spotmarkt der European Power Exchange (EPEX) gehandelt und die Vorhaltung von Regelleistung wird von den Übertragungsnetzbetreibern beschafft.

Eine Möglichkeit der Zwischenspeicherung von Dampf in einem Speichersystem besteht darin, Dampf zu kondensieren und die frei werdende Kondensationswärme in einen Latentwärmespeicher zu überführen, sowie die Wärme der Überhitzung des Dampfes und der Unterkühlung des Kondensates in sensible Wärmespeicher.

Latentwärmespeicher nutzen sogenannte Phasenwechselspeichermedien, deren latente Schmelzwärme, Lösungswärme oder Absorptionswärme wesentlich größer ist als die Wärme, die sie aufgrund ihrer normalen spezifischen Wärmekapazität (ohne den Phasenumwandlungseffekt) speichern können. Bekannte Anwendungsbeispiele für Latentwärmespeicher sind Wärmekissen, Kühlakkus oder mit Paraffin gefüllte Speicherelemente in den Tanks von solarthermischen Anlagen.

Für den Einsatz von Latentwärmespeichern sprechen die relativ hohe spezifische Speicherkapazität latenter Wärmespeichermaterialien und eine geringe erforderliche Temperaturdifferenz zwischen Belade- und Entladedampf im Vergleich zu einer Wärmespeicherung in einem sensiblen Speichermedium.

Trotz der Vorzüge der Speicherung der Kondensationswärme des Dampfes in einem Latentwärmespeicher (Phasenwechselspeichermedium) verbleibt ein gravierendes Problem, durch das das Potential der Flexibilisierung industrieller KWK stark eingeschränkt wird. Wegen der Grädigkeit der Wärmeübertragung zwischen Speichermedium und kondensierendem Dampf oder verdampfendem Wasser hat nämlich der bei der Entladung des Latentwärmespeichers abgegebene gesättigte Entladedampf eine niedrigere Temperatur und dadurch bedingt immer einen geringen Druck als der zur Beladung eingesetzte Prozessdampf. Der Entladedampf kann deshalb nicht auf der Druckstufe des für die Beladung eingesetzten Prozessdampfes in das Dampfversorgungssystem rückgespeist werden.

Dieses Problem der Druckdifferent zwischen Be- und Entladedampf ist aus der Einbindung von Gleitdruckspeichern in Dampfversorgungssysteme bekannt. Deshalb werden sie mit höherem Druck als dem des zu entladenden Dampfes beladen.

In einem Verfahren zur schnellen Leistungserhöhung einer Dampfturbinenanlage (EP 0 026 798 A1) wird vorgeschlagen, einen Gleitdruckspeicher mit Dampf aus der Versorgungsleitung einer Gegendruckturbine oder aus einer Turbinenanzapfung zu beladen, um gesättigten Entladedampf auf der Gegendruckstufe aus dem Speicher rückspeisen zu können.

In einem anderen Vorschlag (DE000002458961A1, Dampfspeicheranlage) wird ein Gleitdruckspeicher mit Heißwasser einer hohen Druckstufe beladen. Durch eine Wärmeübertragung von der Heißwasserzufuhr auf den Entnahmedampf des Gleitdruckspeichers kann mit dieser Anordnung überhitzter und nicht nur gesättigter Dampf bereitgestellt werden.

In einem weiteren Beispiel wird Dampf zur Beladung eines Gleitdruckspeichers komprimiert, um den Entladedampf wieder auf die Druckstufe des zur Beladung genutzten Dampfes rückspeisen zu können (CH 240 453 A, Dampf-Heizanlage mit Speicher).

Ebenfalls mit einer Druckerhöhung arbeitet ein Vorschlag (DE 399 300 A, Wärmespeicheranlage für Gegendruckdampfmaschinen), in dem ein erster Niederdruck-Gleitdruckspeicher aus der Ableitung der Gegendruckseite einer Turbine beladen wird. Mit Hilfe eines Kompressors, der mit Dampf aus der Versorgungsleitung der Gegendruckturbine betrieben wird, wird ein zweiter Gleitdruckspeicher auf höherem Druckniveau aus dem Niederdruckspeicher beladen. Dieser zweite Speicher wiederum kann im Bedarfsfall Entladedampf an die Turbine oder auf die Gegendruckstufe einspeisen. Abhängig davon auf welcher Druckstufe überschüssiger Dampf anfällt, wird der erste oder der zweite Gleitdruckspeicher beladen. DE 10 2007 046854 B3 offenbart ein Verfahren mit einem Gleitdruckspeicher mit allen Merkmalen des Oberbegriffs des Anspruchs 1.

Es gibt auch einen Vorschlag, den Beladedampf über das zur Rückspeisung in das Dampfnetz erforderliche Maß hinaus zu komprimieren, um eine Erhöhung der Speicherdichte des Gleitdruckspeichers zu erreichen (CH 184 689 A, Dampfanlage mit durch Überschussdampf aufgeladenen Wärmespeicher).

Für die Kompression des Dampfes werden in diesen Beispielen mit Dampf oder elektrisch angetriebene mechanische Verdichter und teilweise Dampf-Thermokompressoren (Strahlapparate) vorgeschlagen.

Latentwärmespeicher zeichnen sich gegenüber Gleitdruckspeichern durch eine höhere Speicherdichte aus und sie haben nicht den Nachteil der Gleitdruckspeicher, der darin besteht, dass während ihrer Entladung der Druck des Entladedampfes abnimmt.

Das Potential der Dampfspeicherung zur Flexibilisierung von KWK-Anlagen kann nur nutzbar gemacht werden, wenn mit hohen Speicherdichten und mit einer kostengünstigen, robusten und flexiblen Lösung für die Rückspeisung von Prozessdampf mit konstantem Druck auf die Druckstufe der Bereitstellung gearbeitet werden kann.

Mechanische Verdichter wie zum Beispiel Turboverdichter, die für große Dampfströme eingesetzt werden können, erfüllen diese Anforderungen nicht. Sie haben beispielsweise hohe Anschaffungskosten und sind für kurzfristigen An- und Abfahrvorgänge warm im Stand-by zu halten, wodurch ihr flexibler Einsatz aufwendig ist.

Es bestand daher unverändert der Bedarf an der Bereitstellung eines Verfahrens für die Zwischenspeicherung von Dampf aus einem Kraftwerk, insbesondere einer KWK-Anlage, mit dem eine Leistungsverschiebung und/oder Leistungsdynamisierung desselben erreicht werden kann und bei dem zwischengespeicherter Prozessdampf bei der Entladung des Speichers auf dem Druckniveau der Entnahme des Prozessdampfes zur Beladung des Speichers in das Dampfversorgungssystem rückgespeist wird.
Überraschend zeigt sich, dass die oben beschriebene Aufgabenstellung durch Verschaltung eines oder mehrerer Dampf-Thermokompressoren und eines oder mehrerer Speichersysteme mit je einem Latentwärmespeicher für die Aufnahme der Kondensationswärme des Prozessdampfes der KWK-Anlage gelöst werden kann.
Dampf-Thermokompressoren ermöglichen die Verdichtung von Saugdampf mit niedrigerem Druck mit Hilfe eines Treibdampfes mit höherem Druck. Da in einer KWK-Anlage zur industriellen Dampfversorgung Dampf unterschiedlicher Druckstufen bereitgestellt wird, ist die Versorgung des Thermokompressors mit Treibdampf gut möglich.

Dampf-Thermokompressoren haben keine beweglichen Bauteile. Deshalb sind sie robust und für den flexiblen Einsatz geeignet.

Dampf-Thermokompressoren sind bewährte Bauteile, die von verschiedenen Herstellern angeboten werden. Sie werden häufig bei niedrigeren als den in einer KWK-Anlage zur Dampfversorgung üblichen Drücken eingesetzt, z. B. zur Wärmerückgewinnung und zum Kühlen. Es gibt auch Vorschläge dazu, sie im Kraftwerksbereich zur Optimierung der Energieausnutzung einzusetzen (DE 19535318A1; Verfahren und Anordnung zum Vorwärmen des Speisewassers eines Dampferzeugers in Kraftwerksprozessen, FR2984400A1, Procede et Installation de Cogeneration avec Thermocompression). Für den Fachmann war es daher unerwartet, dass sie darüber hinaus auch im Bereich der Kraftwerksflexibilisierung im erfindungsgemäßen Verfahren beziehungsweise System eingesetzt werden können.

Ein erster Gegenstand der vorliegenden Erfindung ist daher ein Verfahren zur Flexibilisierung eines thermischen Kraftwerkes, vorzugsweise einer industriellen KWK-Anlage, umfassend das Zwischenspeichern der Kondensationswärme des Prozessdampfes des Kraftwerkes beziehungsweise der KWK-Anlage in mindestens einem Latentwärmespeicher, dadurch gekennzeichnet, dass mindestens ein Latentwärmespeicher mittels mindestens eines Dampf-Thermokompressors mit der KWK-Anlage derart verbunden wird, dass der Speicherentladedampf auf dem Druckniveau des Prozessdampfes, mit dem der Latentwärmespeicher beladen wurde, bereitgestellt werden kann.

Bei der Übertragung im Wärmtauscher der bei der Kondensation des Prozessdampfes frei werdenden Wärme auf das die Wärme aufnehmende Phasenwechselmaterial, mit dem der Latentwärmespeicher bestückt ist, ist die Temperatur, bei der der Phasenwechsel des Phasenwechselmaterials stattfindet, geringer als die Temperatur, bei der Prozessdampf auf der gewählten Druckstufe kondensiert. In gleicher Weise ist bei der Entladung des Speichers für die Übertragung der im Phasenwechselmaterial enthaltenen Wärme auf den entstehenden Entladedampf die Temperatur des entstehenden Dampfes geringer, als die Temperatur des Phasenwechsels. Das hat zur Folge, dass der bei der Speicherentladung entnehmbare Entladedampf einen geringeren Druck hat, als der für die Speicherbeladung eingesetzte Prozessdampf.

Damit der Entladedampf auf der Druckstufe des für die Beladung eingesetzten Prozessdampfes in das Dampfversorgungssystems eingespeist werden kann, wird ein Dampf-Thermokompressor oder werden mehrere Dampf-Thermokompressoren in den Prozess integriert. Die Hinzuschaltung kann auf der Beladeseite oder auf der Entladeseite des Speichersystems erfolgen. Bei einer Integration auf der Beladeseite wird die Phasenwechseltemperatur so erhöht, dass der Entladedampf auf die Druckstufe des zur Beladung eingesetzten Prozessdampfes eingespeist werden kann. Bei einer Integration der Dampf-Thermokompression auf der Entladeseite des Speichersystems wird der Entladedampf durch Thermokompression auf die Druckstufe des zur Beladung eingesetzten Prozessdampfes gehoben.

Die Integration mehrerer Dampf-Thermokompressoren in das Dampfversorgungssystem kann modular erfolgen. Beispielsweise können sie parallel geschaltet werden, um einen größeren Leistungsbereich abzudecken. Sie können auch geregelt werden.

Gemäß verschiedenen Ausführungsformen des erfindungsgemäßen Verfahrens kann die Prozessintegration der Dampf-Thermokompression auf der Belade- oder auf der Entladeseite des Speichersystems erfolgen.

Bei dem erfindungsgemäßen Verfahren ist es ebenfalls möglich, mehrere getrennte Speichersysteme auf unterschiedlichen Druckstufen des Dampfversorgungssystems mit Prozessdampf der jeweiligen Druckstufe zu beladen. Durch Einbindung von Thermokompressoren, die mit Dampf aus der jeweils übergeordneten Druckstufe als Treibdampf betrieben werden, kann der Entladedampf des Speichersystems auf der jeweiligen Druckstufe in das Dampfversorgungssystem rückgespeist werden.

Durch das erfindungsgemäße Verfahren wird die Bereitstellung von Prozessdampf und von Elektrizität für einen begrenzten Zeitraum entkoppelt und Leistung kann zeitlich verschoben werden.

Mit dem erfindungsgemäßen Verfahren kann auch die Leistungsänderungsgeschwindigkeit der Elektrizitätserzeugung bei Leistungsabsenkung oder bei Leistungserhöhung unabhängig von der Leistungsänderungsgeschwindigkeit der Dampferzeugung erhöht werden.

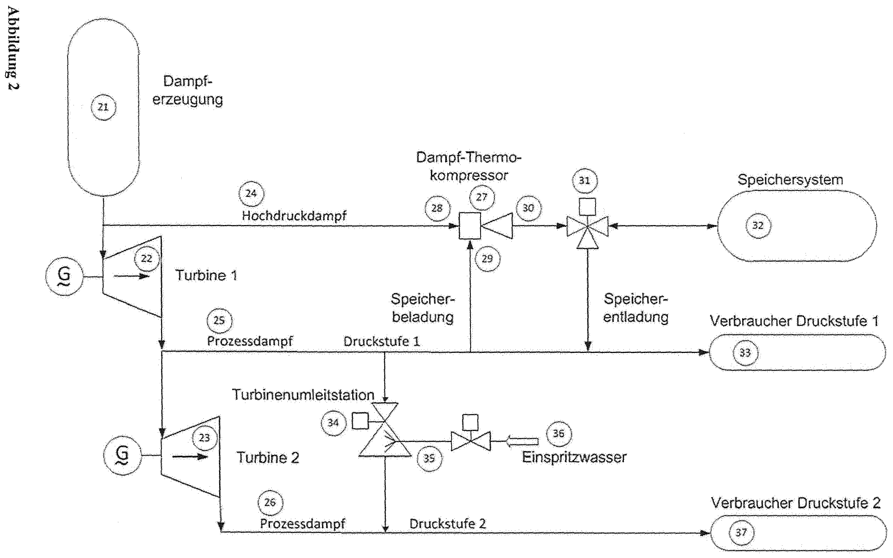

Soll z. B. die Generatorleistung mit einer steileren Lastrampe abgesenkt werden, als es durch eine Reduzierung der Leistung des Dampferzeugers möglich ist, wird Dampf statt durch die Turbine über eine Turbinenumleitstation (**Fig. 2**) entspannt und die den Bedarf überschreitende Dampfmenge, die aufgrund der Einspritzkühlung anfällt, wird zwischengespeichert. Umgekehrt kann durch Rückspeisung von zwischengespeichertem Dampf die Generatorleistung schneller als durch Leistungssteigerung des Dampferzeugers erhöht werden.

Zwei bevorzugte Ausführungsformen des erfindungsgemäßen Verfahrens sollen beispielhaft im Folgenden näher beschrieben werden.

Der Dampf-Thermokompressor kann beispielsweise gemäß einer ersten bevorzugten Ausführungsform bei der Entladung des Speichersystems eingesetzt werden.

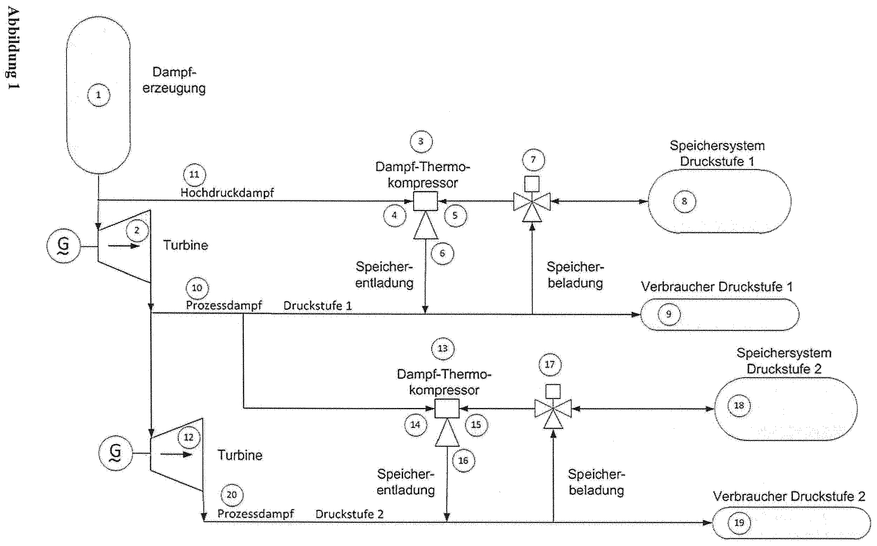

Bei dieser Verschaltung, die in **Fig. 1** skizziert ist, wird der Druck des Entladedampfes durch Thermokompression auf das Druckniveau des zur Beladung eingesetzten Prozessdampfes angehoben. Armaturen sind in der Skizze nur zur Verdeutlichung enthalten. Zur Beladung des Speichersystems wird Prozessdampf 10 der Druckstufe 1 über die Armatur 7 dem Speichersystem 8 der Druckstufe 1 zugeführt. Bei der Entladung des Speichersystems 8 wird der Dampf-Thermokompressor 3 auf der Treibseite 4 mit Hochdruckdampf 11 verbunden und auf der Saugseite 5 über die Armatur 7 mit dem Speichersystems 8. Der Hochdruckdampf 11 wird der Dampferzeugung 1 oder einer damit direkt verbundenen Leitung entnommen. Der komprimierte Entladedampf wird über den Ausgang 6 des Thermokompressors 3 als Prozessdampfes 10 auf die Druckstufe 1 in das Dampfversorgungssystem zurückgespeist. Der Einsatz des Hochdruckdampfes 11 als Treibdampf zum Betrieb des Thermokompressors 3 erfolgt bei dieser Verschaltung genau in den Zeiträumen, in denen die Stromnachfrage gering ist und Hochdruckdampf mit verringerter Leistung über Turbine 2 verstromt wird. In Phasen großer Stromnachfrage wird dagegen Turbine 2 mit hoher Leistung betrieben und das Dampfspeichersystem 8 wird mit der den Bedarf der Dampfverbraucher 9 der Druckstufe 1 übersteigenden Prozessdampfmenge beladen. (Leistungsverschiebung).

In **Fig. 1** ist auch die Möglichkeit der Integration eines zweiten Speichersystems 18 für Prozessdampf 20 auf einer niedrigeren Druckstufe 2 skizziert. Die Einspeicherung des Prozessdampfes 20 in das Speichersystem 18 erfolgt über die Armatur 17. Bei der Entladung des Speichersystems 18 wird der Dampf-Thermokompressor 13 auf der Treibseite 14 mit Prozessdampf 10 der Druckstufe 1 und auf der Saugseite 15 über die Armatur 17 mit dem Speichersystem 18 verbunden. Der komprimierte Entladedampf wird über den Ausgang 16 des Thermokompressors 13 als Prozessdampfes 20 auf der Druckstufe 2 des Dampfversorgungssystems zurückgespeist. Das Dampfspeichersystem 18 auf Druckstufe 2 wird in Phasen hoher Stromnachfrage bei hoher Leistung der Turbine 2 und der Turbine 12 mit Prozessdampf 20 der Druckstufe 2 beladen, und zwar mit der Menge, die den Bedarf der Verbraucher 19 auf Druckstufe 2 in diesem Zeitraum überschreitet. In Phasen geringen Strombedarfs werden die Turbinen 2 und 12 mit geringer Leistung oder gar nicht betrieben und die Versorgung der Verbraucher 19 mit Prozessdampf 20 der Druckstufe 2 wird durch Entladung des Speichers 18 der Druckstufe 2 gestützt oder übernommen.

Durch die Entkopplung der Elektrizitäts- und Prozess-Dampfbereitstellung wird mit dieser Anordnung elektrische Leistung der KWK-Anlagen in Phasen hohe Leistungsnachfrage verfügbar. Die dabei überschüssige Dampfproduktion wird zwischengespeichert und deckt in der Entladephase nach Thermokompression den Prozessdampfbedarf.

Der Dampf-Thermokompressor kann statt auf der Entladeseite auch gemäß einer weiteren bevorzugten Ausführungsform bei der Beladung des Speichersystems eingesetzt werden.

Bei einer solchen Anordnung, wie sie in **Fig. 2** skizziert ist, wird die Kondensationstemperatur durch Erhöhung des Drucks des zur Beladung eingesetzten Prozessdampfes so weit angehoben, dass bei der Speicherentladung Dampf auf dem Druckniveau des für die Beladung eingesetzten Prozessdampfes abgegeben wird.

Diese Verschaltung kann eingesetzt werden für eine Erhöhung der Steilheit der Leistungsrampe der Elektrizitätserzeugung gegenüber einer Leistungsänderungsgeschwindigkeit, die alleine durch Absenkung der Dampferzeugung erreichbar ist (Leistungsdynamisierung). Bei Anforderung einer steilen elektrischen Leistungsabsenkung, z. B. für die Bereitstellung von Regelleistung, wird Prozessdampf 25 der Druckstufe 1 im Bypass zur Turbine 23 über eine Turbinenumleitstation 34 mit Einspritzkühlung 35 auf Druckstufe 2 entspannt und die Leistung von Turbine 23 reduziert. Die Temperatur des in der Turbinenumleitstation 34 gedrosselten Dampfes wird durch Einspritzen von Einspritzwasser 36 mittels der Einspritzkühlung 35 auf die Temperatur des Prozessdampfes 26 der Druckstufe 2 eingestellt. Die dabei anfallende zusätzliche Dampfmenge führt dazu, dass die erzeugte Dampfmenge zeitweise den Bedarf der Verbraucher 33 und 37 übersteigt. Prozessdampf 25 der Druckstufe 1 wird deshalb zwischengespeichert und auf der Saugseite 29 dem Dampf-Thermokompressor 27 zugeleitet. Der Thermokompressor wird mit Hochdruckdampf 24 über die Treibseite 28 angetrieben. Der Hochdruckdampf 24 wird der Dampferzeugung 21 oder einer direkt damit verbundenen Leitung entnommen. Der verdichtete Prozessdampf am Ausgang 30 der Thermokompressors wird über die Armatur 31 zur Beladung dem Speichersystem 32 zugeleitet. Gleichzeitig wird die Leistung der Dampferzeugung 21 kontinuierlich abgesenkt, und zwar so lange bis kein den Verbrauch überschreitender Prozessdampf mehr einzuspeichern ist.

Zum Ende des Zyklus der Bereitstellung von Regelenergie ist die elektrische Leistung wieder auf das ursprüngliche Leistungsniveau vor Erbringung der Regelenergie anzuheben, und zwar in einem Zeitraum gleicher Dauer wie für die Absenkung der Leistung. Bei der hier skizzierten Verschaltung stehen in dieser Phase der Hochdruckdampf vollumfänglich und der Entladedampf des Speichersystems 32 zur Verfügung.

Mit Beendigung der Bereitstellung von Regelenergie werden die Turbinenumleitstation 34 und die Vorrichtung zu Einspritzkühlung 35 geschlossen und Prozessdampf 25 der Druckstufe 1 wird über Turbine 23 zu Prozessdampf 26 der Druckstufe 2 entspannt. Gleichzeitig wird die Entladung des Speichersystems 32 eingeleitet. Dazu wird der Entladedampf über die Armatur 31 der Versorgung mit Prozessdampfes 25 der Druckstufe 1 zugeführt. Zeitgleich mit der Entladung des Speichersystems 32 wird die Dampferzeugung 21 hochgefahren, und zwar so lange bis ohne Zuspeisung von Entladedampf die elektrische Leistung der KWK-Anlage das ursprüngliche Niveau vom Beginn des Zyklus der Regelleistungserbringung erreicht hat.

Die beiden oben beschriebenen Verschaltungsvarianten und deren zugeordneten Einsatzzwecke sind nur Beispiele. So ist z. B. auch die Integration eines Speichersystems auf Druckstufe 1 des Dampfversorgungssystems mit Thermokompression auf der Entladeseite und Integration einer Turbinenumleitstation im Bypass zur Turbine zwischen Druckstufe 1 und Druckstufe 2 denkbar.

Ein Aspekt der vorliegenden Erfindung ist der Einsatz eines Speichersystems für Prozessdampf, das aus mehreren Speichermodulen besteht, die jeweils die Überhitzungswärme, die Kondensationswärme und die bei der Unterkühlung des Kondensates frei werdende Wärme aufnehmen, und in dem das Speichermodul zur Aufnahme der Kondensationswärme auf konstanter Temperatur arbeitet und bevorzugt ein Latentwärmespeicher ist. Vorstellbar ist auch ein Wärmespeicher, der bei konstanter Temperatur die thermische Energie in Form chemisch gebundener Energie speichert. Das erfindungsgemäße Verfahren ist dadurch gekennzeichnet, dass ein solches Speichersystem durch Einbindung eines Dampf-Thermokompressors oder mehrerer Dampf-Thermokompressoren derart in das Dampfversorgungssystem eingebunden wird, dass Speicherentladedampf auf dem Druckniveau des Prozessdampfes, mit dem das Speichersystem beladen wurde, bereitgestellt werden kann.

In dem erfindungsgemäßen Verfahren ist es auch möglich, mehrere getrennte Speichersysteme auf unterschiedlichen Druckstufen des Dampfversorgungssystems mit Prozessdampf der jeweiligen Druckstufe zu beladen. Durch Einbindung von Thermokompressoren, die mit Dampf aus der jeweils übergeordneten Druckstufe als Treibdampf betrieben werden, kann der Entladedampf auf der jeweiligen Druckstufe in das Versorgungssystem für Prozessdampf rückgespeist werden.

Mit dem erfindungsgemäßen Speichersystem wird die Bereitstellung von Prozessdampf und von Elektrizität für einen begrenzten Zeitraum entkoppelt und Leistung kann zeitlich verschoben werden.

Mit dem erfindungsgemäßen Verfahren kann auch die Leistungsänderungsgeschwindigkeit der Elektrizitätserzeugung bei Leistungsabsenkung oder bei Leistungserhöhung unabhängig von der Leistungsänderungsgeschwindigkeit der Dampferzeugung erhöht werden.

## Patentansprüche

1. Verfahren zur Flexibilisierung eines thermischen Kraftwerkes umfassend das Zwischenspeichern der Kondensationswärme des Prozessdampfes des Kraftwerks in mindestens einem Wärmespeicher (8, 18, 32), der bei konstanter Temperatur arbeitet, **dadurch gekennzeichnet, dass** der mindestens eine Wärmespeicher (8, 18, 32), der bei konstanter Temperatur arbeitet, mittels mindestens eines Dampf-Thermokompressors (3, 13, 27) mit dem Kraftwerk derart verbunden wird, dass der Speicherentladedampf auf dem Druckniveau des Prozessdampfes (10, 20, 25, 26), mit dem der Wärmespeicher (8, 18, 32) beladen wurde, bereitgestellt werden kann

2. Verfahren gemäß Anspruch 1, **dadurch gekennzeichnet, dass** das Kraftwerk eine industrielle KWK-Anlage zur Produktion von Elektrizität und Prozessdampf ist.

3. Verfahren gemäß Anspruch 1 oder 2, **dadurch gekennzeichnet, dass** der Wärmespeicher, der bei konstanter Temperatur arbeitet, ein Wärmespeicher ist, der die Wärme in Form latenter Wärme oder in Form chemisch gebundener Energie speichert.

4. Verfahren gemäß einem der vorstehenden Ansprüche, **dadurch gekennzeichnet, dass** der Wärmespeicher gemäß Anspruch 3 durch Module zur Aufnahme von Überhitzungs- und Unterkühlungswärme und zur Aufnahme von Kondensat zu einem Speichersystem ergänzt werden kann.

5. Verfahren gemäß einem der vorstehenden Ansprüche, **dadurch gekennzeichnet, dass** der Dampf-Thermokompressor oder die Dampf-Thermokompressoren auf der Treibseite mit Dampf einer höheren Druckstufe versorgt werden und auf der Saugseite zu komprimierender Prozessdampf oder zu komprimierender Entladedampf des Speichersystems eingeleitet wird.

6. Verfahren gemäß einem der vorstehenden Ansprüche, **dadurch gekennzeichnet, dass** der Dampf-Thermokompressor oder die Dampf-Thermokompressoren auf der Beladeseite des Speichersystems hinzugeschaltet wird.

7. Verfahren gemäß einem der vorstehenden Ansprüche, **dadurch gekennzeichnet, dass** der Dampf-Thermokompressor oder die Dampf-Thermokompressoren auf der Entladeseite des Speichersystems hinzugeschaltet wird.

8. Verfahren gemäß einem der vorstehenden Ansprüche, **dadurch gekennzeichnet, dass** mehrere Dampf-Thermokompressoren parallel geschaltet werden.

9. Verfahren gemäß einem der vorstehenden Ansprüche, **dadurch gekennzeichnet, dass** der Dampf-Thermokompressor oder die Dampf-Thermokompressoren geregelt werden.

10. Verfahren gemäß einem der vorstehenden Ansprüche, **dadurch gekennzeichnet, dass** mehrere getrennte Speichersysteme auf unterschiedlichen Druckstufen des Dampfversorgungssystems mit Prozessdampf der jeweiligen Druckstufe beladen werden.

## Claims

1. Method for increasing the flexibility of a thermal power plant, involving the interim storage of the heat of condensation of the process steam of the power plant in at least one heat store (8, 18, 32) which operates at constant temperature, **characterized in that** the at least one heat store (8, 18, 32) which operates at constant temperature is connected to the power plant via at least one steam thermocompressor (3, 13, 27) such that the store discharge steam can be provided at the pressure level of the process steam (10, 20, 25, 26) at which the heat store (8, 18, 32) was charged.

2. Method according to Claim 1, **characterized in that** the power plant is an industrial CHP plant for the production of electricity and process steam.

3. Method according to Claim 1 or 2, **characterized in that** the heat store which operates at constant temperature is a heat store which stores the heat in the form of latent heat or in the form of chemically bound energy.

4. Method according to one of the preceding claims, **characterized in that** the heat store according to Claim 3 can be expanded into a storage system by means of modules for receiving superheating heat and subcooling heat and for receiving condensate.

5. Method according to one of the preceding claims, **characterized in that** the steam thermocompressor or the steam thermocompressors are supplied on the driving side with steam from a higher pressure stage, and process steam which is to be compressed, or discharge steam from the storage system which is to be compressed, is introduced on the suction side.

6. Method according to one of the preceding claims, **characterized in that** the steam thermocompressor or the steam thermocompressors is/are connected on the charge side of the storage system.

7. Method according to one of the preceding claims, **characterized in that** the steam thermocompressor or the steam thermocompressors is/are connected on the discharge side of the storage system.

8. Method according to one of the preceding claims, **characterized in that** multiple steam thermocompressors are connected in parallel.

9. Method according to one of the preceding claims, **characterized in that** the steam thermocompressor or the steam thermocompressors are controlled.

10. Method according to one of the preceding claims, **characterized in that** multiple separate storage systems at different pressure stages of the steam supply system are charged with process steam from the respective pressure stage.

## Revendications

1. Procédé de flexibilisation d'une centrale thermique, ledit procédé comprenant le stockage intermédiaire de la chaleur de condensation de la vapeur de traitement de la centrale dans au moins un accumulateur de chaleur (8, 18, 32) qui fonctionne à température constante, **caractérisé en ce que** l'au moins un accumulateur de chaleur (8, 18, 32), qui fonctionne à température constante, est relié à la centrale au moyen d'au moins un thermocompresseur à vapeur (3, 13, 27) de telle sorte que la vapeur de décharge d'accumulateur est fournie au niveau de pression de la vapeur de traitement (10, 20, 25, 26) à laquelle l'accumulateur de chaleur (8, 18, 32) a été chargé.

2. Procédé selon la revendication 1, **caractérisé en ce que** la centrale est une installation de cogénération industrielle destinée à la production d'électricité et de vapeur de traitement.

3. Procédé selon la revendication 1 ou 2, **caractérisé en ce que** l'accumulateur de chaleur, qui fonctionne à température constante, est un accumulateur de chaleur qui stocke la chaleur sous forme de chaleur latente ou sous forme d'énergie chimiquement liée.

4. Procédé selon l'une des revendications précédentes, **caractérisé en ce que** l'accumulateur de chaleur selon la revendication 3 peut être complété par des modules destinés à recevoir de la chaleur de surchauffe et de surfusion et à recevoir un condensat destiné à un système accumulateur.

5. Procédé selon l'une des revendications précédentes, **caractérisé en ce que** le thermocompresseur à vapeur ou les thermocompresseurs à vapeur sont alimentés en vapeur d'un niveau de pression supérieur du côté entraînement et la vapeur de traitement à comprimer ou la vapeur de décharge à comprimer du système accumulateur est introduite du côté aspiration.

6. Procédé selon l'une des revendications précédentes, **caractérisé en ce que** le thermocompresseur à vapeur ou les thermocompresseurs à vapeur sont activés du côté chargement du système accumulateur.

7. Procédé selon l'une des revendications précédentes, **caractérisé en ce que** le thermocompresseur à vapeur ou les thermocompresseurs à vapeur sont activés du côté décharge du système accumulateur.

8. Procédé selon l'une des revendications précédentes, **caractérisé en ce qu'**une pluralité de thermocompresseurs à vapeur sont montés en parallèle.

9. Procédé selon l'une des revendications précédentes, **caractérisé en ce que** le thermocompresseur à vapeur ou les thermocompresseurs à vapeur sont régulés.

10. Procédé selon l'une des revendications précédentes, **caractérisé en ce qu'**une pluralité de systèmes accumulateurs séparés sont chargés avec de la vapeur de traitement des étages de pression respectifs à différents niveaux de pression du système d'alimentation en vapeur.
